# EUROPÄISCHE PATENTSCHRIFT

(11) **EP 3 103 177 B1**
(45) Veröffentlichungstag und Bekanntmachung des Hinweises auf die Patenterteilung: **19.08.2020**
(21) Anmeldenummer: 15707293.5
(22) Anmeldetag: 04.02.2015
(51) Int. Cl.: H02G 7/08, H02G 7/12

(54) **VERFAHREN ZUR BEFESTIGUNG EINER BEFESTIGUNGSKLEMME AN EINEM SEIL EINER FREILEITUNGS- SOWIE BEFESTIGUNGSKLEMME**
METHOD FOR SECURING A SECURING CLAMP ON A CORD OF A FREELINE AND SECURING CLAMP
PROCÉDÉ DE FIXATION D'UNE BUTÉE DE FIXATION SUR UN CÂBLE D'UNE LIGNE AÉRIENNE ET BUTÉE DE FIXATION

(30) Priorität: 04.02.2014 DE 102014201999
(43) Veröffentlichungstag der Anmeldung: 14.12.2016
(73) Patentinhaber: Richard Bergner Elektroarmaturen GmbH & Co. KG, 01445 Radebeul (DE)
(72) Erfinder: MURR, Manfred, 91522 Ansbach (DE)
(74) Vertreter: FDST Patentanwälte
(86) Internationale Anmeldenummer: PCT/EP2015/052235
(87) Internationale Veröffentlichungsnummer: WO 2015/117976

(56) Entgegenhaltungen:
- EP-A1- 0 379 446
- WO-A1-00/27009
- FR-A1- 2 961 032
- GB-A- 2 139 825
- JP-A- H1 132 419

## Beschreibung

Die Erfindung betrifft ein Verfahren zur Befestigung einer Befestigungsklemme an einem Seil, insbesondere einem Freileitungsseil. Die Erfindung betrifft weiterhin eine Befestigungsklemme zur Befestigung an einem Seil.

Bei Freileitungen werden üblicherweise zwischen beispielsweise durch Masten gebildete Abspannpunkte Freileitungsseile gespannt. Die Freileitungsseile sind hierbei insbesondere Leiterseile zum Transport von elektrischem Strom, können daneben aber auch Datenkabel sein. Die Abspannpunkte sind oftmals mehrere hundert Meter voneinander beabstandet. Aufgrund dieses großen Abstandes ist erforderlich, dass an den Seilen der Freileitungen zu Schutzzwecken Gegenstände verschiedener Art angebracht werden müssen. So werden üblicherweise mehrere Leiterseile über so genannte Feldabstandshalter miteinander verbunden, über die die einzelnen Leiterseile in einem definierten Abstand zueinander gehalten werden. Ein derartiger Feldabstandshalter ist beispielsweise aus dem deutschen Gebrauchsmuster DE 91 12 701 U1 zu entnehmen.

Zur Vermeidung von unerwünschten Schwingungen ist es darüber hinaus auch bekannt, so genannte Schwingungsdämpfer zu befestigen. Die Schwingungsdämpfer selbst bestehen hierbei beispielsweise aus einem langgestreckten Element, insbesondere ein Dämpferseil, welches über eine Dämpferklemme am Seil der Freileitung befestigt ist. Eine derartige Dämpferklemme ist beispielsweise aus der DE 101 63 679 C1 zu entnehmen.

Weiterhin bilden Eisablagerung Probleme, die beispielsweise zu einem Verdrehen des Freileitungsseils führen. Um dieses zu vermeiden, sind weiterhin so genannte Torsionspendel am jeweiligen Seil befestigt, wie sich beispielsweise aus der DE 10 2009 034 340 A1 ergibt.

Darüber hinaus werden zu Vogelschutz- oder auch Vogelabwehrzwecken weitere Elemente am Seil befestigt, wie beispielsweise Reflektoren.

Bei all diesen Schutzgegenständen ist eine sichere und zuverlässige Befestigung am Seil der Freileitung, insbesondere am Leiterseil, erforderlich. Um dies zu gewährleisten sind herkömmliche Befestigungsklemmen aus zwei Klemmbügeln ausgebildet, die über eine Schraube miteinander verschraubt werden, sodass ein zuverlässiges Klemmen erzielt wird.

Eine derartige Befestigungsklemme ist beispielsweise aus der DE 101 63 679 C1 oder auch der DE 91 12 701 U1 zu entnehmen. Darüber hinaus sind beispielsweise für Aufhängevorrichtungen für Freileitungen auch helixförmig gewundene Fixierstäbe bekannt, welche um das Leitungsseil und durch eine Halteklemme hindurch geführt werden, wie dies beispielsweise aus der DE 100 19 308 B4 zu entnehmen ist.

Alle diese Klemmen erfordern jedoch einen vergleichsweise hohen Montageaufwand, was zu hohen Montagekosten führt. Die ist insbesondere beispielsweise bei Nachrüstmaßnahmen zu Vogelschutzzwecken mit erheblichen Kosten verbunden.

Aus der EP 0 379 446 A1 ist eine Befestigungsklemme zu entnehmen, bei der eine Befestigung an einem Leiterseil mit Hilfe eines Kniehebelmechanismus schraubenlos erfolgt.

Aus der FR 2 961 032 sowie der WO 00/27009 A1 sind weitere Befestigungsklemmen für eine schraubenlose Befestigung zu entnehmen.

In der JP H11 32419 A ist eine schraubenlose Befestigungsklemme beschrieben, die zwei gegeneinander verschwenkbare Bügel aufweist, die in der geschlossenen Stellung mittels einer Kupplungsmechanik miteinander verbunden sind. Die Kupplungsmechanik weist einen federbelasteten Schaft auf, der mittels einer Hydraulik verschiebbar ist. Die Hydraulik kann Teil eines Manipulators sein.

Ausgehend hiervon liegt der Erfindung die Aufgabe zugrunde, eine einfache und kostengünstige Montage von Befestigungsklemmen an einem Seil insbesondere einer Freileitung zu ermöglichen.

Die Aufgabe wird erfindungsgemäß gelöst durch ein Verfahren zur Befestigung einer Befestigungsklemme an einem Seil insbesondere einer Freileitung, mit den Merkmalen des Anspruchs 1 oder des Anspruchs 2. Hierzu ist ein Manipulator vorgesehen, mit dessen Hilfe eine jeweilige Befestigungsklemme automatisch am Seil befestigt wird, also maschinell ohne dass eine manuelle Betätigung der Befestigungsklemme durch einen Monteur erforderlich ist. Der Manipulator umfasst hierzu eine Montagemechanik, welche zur automatischen Montage und Betätigung der Befestigungsklemme ausgebildet ist. Durch die automatisierte Befestigung ist der Montageaufwand deutlich geringer, da zum einen ein jeweiliger Monteur nicht mehr an das Seil heran muss. Es ist daher im freien Feld nicht mehr erforderlich, dass Betriebspersonal die einzelnen Gegenstände manuell an die Seile der Freileitung befestigt. Insbesondere bei einer stromführenden Freileitung ist das von besonderem Vorteil. Zum einen da insbesondere bestehende Freileitungen oftmals nur mit Aufwand zugänglich sind. Weiterhin kann eine Montage mit Hilfe des Manipulators auch im stromführenden Zustand erfolgen, so dass also kein Abschalten der stromführenden Freileitung erforderlich ist.

Zweckdienlicherweise werden gemeinsam mit den Befestigungsklemmen Funktionselemente, wie beispielsweise Schwingungsdämpfer, Leitungsmarkierungen und/oder Feldabstandshalter an das Seil befestigt. Diese Funktionselemente sind an den Befestigungsklemmen vormontiert.

Die Befestigungsklemme weist zwei gegeneinander verstellbare Bügel, nämlich einen Hauptbügel und einen Schließbügel sowie ein Betätigungselement auf. Über das Betätigungselement werden die Bügel von einer offenen in eine geschlossene, das Seil klemmende Position automatisch überführt. Das Betätigungselement wird dabei mit Hilfe der Montagemechanik betätigt.

Die beiden Bügel sind dabei vorzugsweise schraubenlos gegeneinander verspannbar, so dass also eine einfache insbesondere mechanische Betätigung und Überführung in die geschlossene Position ermöglicht ist. Insgesamt erfolgt die Betätigung der Betätigungsmechanik automatisch mithilfe des Manipulators. Aufgrund der einfachen Schließmechanik ist es ermöglicht, an einem Seil einer Freileitung Gegenstände automatisiert zu befestigen.

Zunächst wird dabei die Befestigungsklemme mit Hilfe des Manipulators in einer offenen Position an das Seil dieses umgreifend herangeführt, wobei insbesondere der Hauptbügel an das Seil eingehängt wird. Anschließend werden die beiden Bügel gegeneinander mit Hilfe des Betätigungselements verspannt, mit deren Hilfe die beiden Bügel von der offenen in die geschlossene, das Seil klemmende Position überführt werden. Die Bügel sind gemäß der Ausführungsvariante nach Anspruch 1 mechanisch vorgespannt und das Betätigungselement ist ein Sperrglied, nach dessen Entfernung die Bügel automatisch in die geschlossen Position übergehen.

Das Betätigungselement ist insbesondere als eine Betätigungsmechanik ausgebildet, d.h. sie weist mechanische Elemente wie Hebel oder Bügel etc. auf. Das Betätigungselement wird von der Montagemechanik aktiviert, so dass die Klemme in den geschlossenen Zustand übergeht. Andere Betätigungselemente beispielsweise kleine Sprengladungen, thermisch oder elektrisch aktivierte Betätigungselemente, sind ebenfalls möglich. Bei der Montagemechanik handelt es sich allgemein daher um eine Einrichtung zur Betätigung des Betätigungselements und insbesondere um eine Mechanik im engeren Sinne bestehend aus mechanischen Bauteilen.

Ergänzend ist vorgesehen, dass auch das Heranführen der Befestigungsklemme an das Seil automatisch durch den Manipulator erfolgt. Insgesamt erfolgt daher die Befestigung der Befestigungsklemme und damit der Gegenstände an den Seilen der Freileitung vollautomatisch ohne dass ein manueller Eingriff erforderlich ist. Um dies zu ermöglichen ist insbesondere auch vorgesehen, dass der Manipulator automatisiert an eine jeweilige Befestigungsposition am Seil heranfährt. Hierzu umfasst der Manipulator insbesondere eine Antriebseinheit zur selbststätigen Fortbewegung.

Zweckdienlicherweise führt der Manipulator eine Vielzahl von Befestigungsklemmen mit sich, insbesondere eine ausreichende Anzahl, beispielsweise mehr als 10 Stück, um alle erforderlichen / gewünschten Befestigungsklemmen und Funktionselemente zwischen zwei Abspannpunkten eines Freileitungsseils anbringen zu können. Der Manipulator weist daher eine Vorrats- oder Staustrecke auf, in der die einzelnen Befestigungsklemmen bevorratet sind, vorzugsweise mit den bereits daran angeordneten Gegenständen, wie beispielsweise Vogelschutzelemente, Dämpferelemente.

Vorzugsweise ist der Manipulator zur gleichzeitigen Befestigung von mehreren Befestigungsklemmen an mehreren benachbarten Seilen ausgebildet, insbesondere zur Befestigung von Feldabstandhaltern zwischen den Seilen eines Bündels. Bei Feldabstandshalter ist erforderlich, dass über die Befestigungsklemmen mehrere zu einem Bündel zusammengefasste Seile miteinander verbunden werden. Vorzugsweise ist zumindest eine und sind vorzugsweise mehrere vormontierte Feldabstandshalter-Vorrichtungen im Manipulator bevorratet, die dann mit einzelnen Eckpunkten über Befestigungsklemmen an die Seile befestigt werden.

Gemäß einer zweckdienlichen Ausgestaltung ist der Manipulator dabei nach Art einer Laufkatze ausgebildet, welche selbsttätig am Seil entlang fährt. An definierten Positionen, beispielsweise in periodischen Abständen von mehreren Metern, wird dann eine jeweilige Befestigungsklemme mit dem Hauptbügel zunächst auf das Seil aufgehängt und anschließend mithilfe der Betätigungsmechanik dort geklemmt.

Alternativ zu der Laufkatze besteht grundsätzlich auch die Möglichkeit, dass der Manipulator nach Art einer Drohne, also als fernsteuerbares Flugobjekt ausgebildet ist. Insbesondere die Drohne erlaubt eine Montage ohne zwingende Abschaltung der Freileitung.

Das hier beschriebene automatische Befestigungskonzept mit Hilfe eines insbesondere als Laufkatze oder als Drohne ausgebildeten Manipulators wird mit Hilfe von Befestigungsklemme mit einer schraubenlosen Verspannbarkeit durchgeführt.

Die Aufgabe wird weiterhin gelöst durch eine Befestigungsklemme mit den Merkmalen des Anspruchs 9 oder 14, die insbesondere für das zuvor beschriebene Verfahren verwendet wird. Die Befestigungsklemme dient dabei zur Befestigung eines Gegenstands an einem Seil einer Freileitung und weist zwei gegeneinander verstellbare Bügel auf, die im Folgenden als Hauptbügel und als Schließbügel bezeichnet werden. Die beiden Bügel sind von einer offenen Position, in der die Bügel zwischen sich eine Einführöffnung definieren, die größer gleich einem Durchmesser des Seils ist, in eine geschlossene, das Seil klemmende Position überführbar. Im Hinblick auf eine möglichst einfache Montage sind die beiden Bügel schraubenlos gegeneinander verspannbar und die Befestigungsklemme weist ergänzend neben den beiden Bügeln eine zusätzliche Betätigungsmechanik auf, über die die beiden Bügel von der offenen in die geschlossene Position überführbar sind. Die beiden Bügel sind dabei üblicherweise schwenkbeweglich aneinander gehalten.

Von wesentlicher Bedeutung hierbei ist, dass über die Betätigungsmechanik in einfacher Weise, ohne dass eine Schraubaktion erforderlich ist, die beiden Bügel in die klemmende Position überführbar sind. Die Betätigungsmechanik ist dabei derart ausgebildet, dass durch eine einfache Betätigungsbewegung, beispielsweise das Betätigen lediglich eines Betätigungsarms, die beiden Bügel in die klemmende Position überführt werden. Die Betätigungsmechanik ist zugleich auch zur Sicherung der Bügel in der klemmenden Position ausgebildet.

Der Hauptbügel weist dabei üblicherweise zum Einen eine Befestigungsstelle zum Befestigen des Gegenstands auf, welcher an das Seil angehängt werden soll. Die Befestigungsstelle ist dabei beispielsweise eine Öse. Weiterhin ist der Hauptbügel gemäß Anspruch 9 derart ausgebildet, dass die gesamte Befestigungsklemme mithilfe des Hauptbügels an das Seil bei der Montage lose eingehängt werden kann und dann selbsttragend, also ohne weitere Haltemittel am Seil bereits gehalten ist. Bei der Montage ist daher in vorteilhafter Ausgestaltung kein separates Halten der Befestigungsklemme während der Montage erforderlich. Der Hauptbügel weist hierzu eine klauen- oder hakenförmige Seilaufnahme auf. Die Befestigungsstelle für den Gegenstand ist typischerweise gegenüberliegend angeordnet, und zwar derart, dass der Schwerpunkt der gesamten Befestigungsklemmen - gegebenenfalls mit bereits daran befestigtem Gegenstand - den Hauptbügel in Richtung auf das Seil zieht, sodass der Hauptbügel sicher eingehängt ist. Im Unterschied zu einfachen halbschalenartigen Ausgestaltungen ist dadurch die Montage erheblich vereinfacht.

Insgesamt ist durch die vereinfachte Befestigung der Befestigungsklemme eine automatisierte Befestigung der Befestigungsklemme am Seil ermöglicht, sodass diese ohne manuelle Unterstützung vollautomatisch erfolgen kann und vorzugsweise auch erfolgt.

Im Hinblick auf eine möglichst einfache Betätigung umfasst die Betätigungsmechanik gemäß Anspruch 9 einen Hebelmechanismus, welcher einen Betätigungsarm aufweist, über den die beiden Bügel in die geschlossene, klemmende Position überführt werden. Über den Hebelmechanismus sind dabei die beiden Bügel insbesondere wechselseitig miteinander verbunden. Der Hebelmechanismus weist dabei üblicherweise zumindest zwei Hebelarme auf, welche gelenkig miteinander verbunden sind. Der Hebelmechanismus ist daher insgesamt mehrgliedrig. Über einen solchen Hebelmechanismus ist durch einfaches Umlegen einer der Hebelarme, welcher als Betätigungsarm bezeichnet wird, ein sehr einfaches Überführen der Bügel in die klemmende Position ermöglicht. Der Hebelmechanismus ist dabei darüber hinaus auch derart ausgebildet, dass er die beiden Bügel in der geschlossenen, klemmenden Position sichert.

Gemäß einer ersten Ausführungsvariante des Hebelmechanismus ist dieser als ein Knickhebel nach Art eines Doppelhebels ausgebildet und weist zwei Hebelarme auf, die aneinander sowie jeweils an einem der Bügel gelenkig gelagert sind, wobei einer der Hebelarme zugleich den Betätigungsarm bildet. Hierfür ist der Drehpunkt dieses Hebelarms, über den er an dem ihm zugeordneten Bügel gelagert ist, in einem Mittenbereich des Hebelarms angeordnet. Das überstehende Ende bildet dann den Betätigungsarm aus.

Vorzugsweise ist der Betätigungsarm über eine Exzentermechanik exzentrisch gelagert, sodass er bei einer Schwenkbewegung zur Überführung der Bügel in die geschlossene Position, diese in die geschlossene Position aufgrund der exzentrischen Ausbildung presst. Aufgrund der exzentrischen Ausbildung wird daher zumindest am Ende der Schließbewegung die erforderliche Klemmkraft ausgeübt. Insgesamt kann über den Exzenter auch die gesamte Schließbewegung erfolgen.

Gemäß einer zweckdienlichen Weiterbildung weist der Hebelmechanismus dabei einen Zugarm auf, mit dem der Schließbügel in Richtung zum Hauptbügel angezogen wird. Der Betätigungsarm ist gelenkig mit dem Zugarm verbunden. Die beiden Arme stützen sich dabei an dem Hauptbügel bzw. dem Schließbügel ab. Vorzugsweise sind dabei die beiden Arme jeweils durch die Bügel hindurchgeführt. Der Betätigungsarm als überstehender Hebelarm steht daher quasi aus dem einen Bügel, insbesondere dem Hauptbügel, an dessen Rückseite hervor und braucht lediglich noch gegen diesen verschwenkt zu werden, um den Schließbügel in die klemmende Position zu überführen.

In besonders zweckdienlicher Ausgestaltung ist die Betätigungsmechanik insgesamt selbstsperrend ausgebildet, sodass ein sicheres Halten in der geschlossenen Position gewährleistet ist. Unter selbstsperrend wird hierbei verstanden, dass die Betätigungsmechanik derart ausgelegt ist, dass eine Krafteinwirkung auf die beiden Bügel entgegen der Schließrichtung der Bügel zu einer Erhöhung der Schließkraft führen, mit dem die beiden Bügel in der geschlossenen Position gesichert sind.

In einer vorteilhaften Ausgestaltung ist der Schließbügel an einem ersten Drehgelenk schwenkbeweglich am Hauptbügel gelagert. Der Betätigungsarm ist ergänzend gegenüberliegen zu diesem ersten Drehgelenk des Schließbügels an einem zweiten Drehgelenk am Hauptbügel gelagert. Zum Schließen der beiden Bügel wird der Schließbügel zum Hauptbügel hin verschwenkt und gleichzeitig wird auch der Betätigungsarm in Richtung zum Hauptbügel verschwenkt, wobei der Betätigungsarm den Schließbügel dann in der geschlossenen Position sperrt. Insbesondere ist hier eine Selbstsperrung vorgesehen. Bevorzugt sind der Schließbügel und der Betätigungsarm in der geschlossenen Position winklig zueinander orientiert, derart, dass bei einer Krafteinwirkung gegen die Schließrichtung der Betätigungsarm und der Schließbügel gegeneinander verklemmt werden. Ergänzend ist zweckdienlicherweise an einem dieser beiden Elemente ein Formschlusselement angeordnet, welcher zusätzlich die Schließposition sichert.

In einer alternativen Ausführungsvariante ist der Betätigungsarm nicht am Hauptbügel sondern am Schließbügel gegenüberliegend zu dem ersten Drehgelenk schwenkbeweglich angeordnet und zwar derart, dass der Betätigungsarm welcher vorzugsweise ebenfalls nach Art eines Bügels ausgebildet ist, über den Hauptbügel und insbesondere über dessen obere hakenförmige Seilaufnahme geführt ist und den Hauptbügel dadurch übergreift. Gleichzeitig ist ein Schließ- und Klemmmechanismus ausgebildet, sodass durch das Übergreifen die Klemmung sowie Sicherung erfolgt. Der Betätigungsarm ist dabei nach Art einer Schnalle oder auch nach Art eines Überkopfbügels ausgebildet.

In einer bevorzugten weiteren alternativen Ausgestaltung ist der Hebelmechanismus als ein insbesondere selbstsperrender Kniehebelmechanismus ausgebildet, der den Bügel, insbesondere den Schließbügel sowie den Betätigungsarm umfasst. Der Kniehebelmechanismus weist hierbei insbesondere zwei Gelenkarme auf, wobei in der geschlossenen Position das die beiden Gelenkarme verbindende Gelenk insbesondere selbstsperrend ist, also unter einem Winkel geneigt ist, sodass eine Krafteinwirkung entgegen der Schließrichtung nur zu einem weiteren Sperren führt.

In der Ausführungsvariante gemäß Anspruch 9 ist vorgesehen, dass zumindest an einem der Bügel ein Formschlusselement, beispielsweise nach Art eines Widerhakens oder einer Rastnase, ausgebildet ist. Dieses Formschlusselement ist insbesondere am Hauptbügel ausgebildet. Zum Schließen wird der Schließbügel in einfacher Art und Weise mithilfe des Betätigungsarms in die Schließstellung überführt und zwar so weit, bis der Schließbügel mit einem dem Formschlusselement zugeordneten Ende dieses hintergreift. Der Schließbügel ist hierbei wiederum gelenkig am Hauptbügel und zwar vorzugsweise am Ende der hakenförmigen Seilaufnahme angeordnet. Ein überstehender Hebelarm bildet den Betätigungsarm aus. Vorzugsweise ist dieser lediglich als ein Werkzeugangriff ausgebildet, an den beispielsweise eine Betätigungsstange eingeführt oder aufgesetzt werden kann.

In der Ausführungsvariante gemäß Anspruch 14 sind die beiden Bügel elastisch, insbesondere über ein Federelement, gegeneinander verspannt, wobei die Federwirkung in Schließrichtung orientiert ist, sodass also mithilfe der Feder die beiden Bügel zuverlässig in der Schließposition gehalten werden.

Weiter umfasst die Betätigungsmechanik hierbei ein Sperrelement, welches die beiden Bügel in einer offenen Position entgegen der Federkraft hält. Der Federmechanismus wirkt dabei mit dem Sperrelement derart zusammen, dass bei einem Entfernen des Sperrelements die beiden Bügel quasi zuschnappen und somit in die geschlossene Stellung überführt werden. Zur Montage ist daher lediglich ein Entfernen des Sperrelements erforderlich.

Ausführungsbeispiele der Erfindung werden nachfolgend anhand der Figuren näher erläutert. Diese zeigen jeweils in vereinfachten Darstellungen:
- Fig. 1: eine perspektivische Darstellung eines Seils, insbesondere Leiterseils einer Freileitung mit daran befestigter Befestigungsklemme einer ersten Ausführungsvariante.
- Fig. 2a, 2b: perspektivische Darstellungen einer zweiten Ausführungsvariante der Befestigungsklemme,
- Fig. 3a, 3b: eine dritte Ausführungsvariante der Befestigungsklemme,
- Fig. 4a, 4b: eine vierte Ausführungsvariante der Befestigungsklemme,
- Fig. 5a, 5b: eine fünfte Ausführungsvariante der Befestigungsklemme,
- Fig. 6a, 6b: eine sechste Ausführungsvariante der Befestigungsklemme,
- Fig. 7a, 7b: eine siebte Ausführungsvariante der Befestigungsklemme,
- Fig. 8a, 8b: eine achte Ausführungsvariant der Befestigungsklemme,
- Fig. 9: eine ausschnittsweise Darstellung eines einzelnen Seils einer Freileitung zur Illustration des vollautomatischen Montageverfahrens mithilfe eines nach Art einer Laufkatze ausgebildeten Manipulators,
- Fig. 10: in einer stark schematisierten Darstellung ein Querschnitt durch einen Manipulator sowie
- Fig. 11: in einer stark schematisierten Darstellung einen Längsschnitt durch einen Manipulator.

In den Figuren sind gleich wirkende Teile mit den gleichen Bezugszeichen versehen.

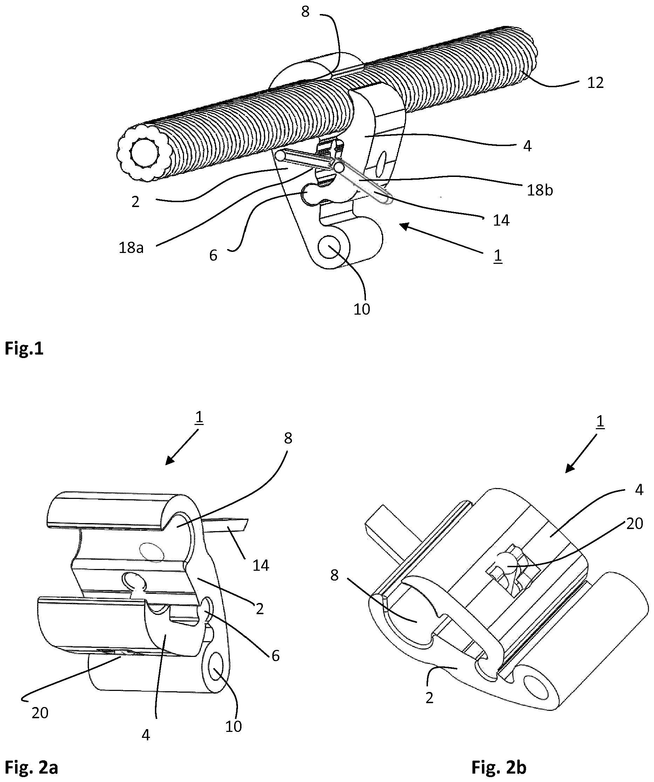

Allen Ausführungsbeispielen der Befestigungsklemme 1 ist gemeinsam, dass diese einen Hauptbügel 2 sowie einen Schwenkbügel 4 aufweisen, welcher an einem ersten Drehgelenk 6 am Hauptbügel 2 schwenkbar gelagert ist. Bei den beiden Bügeln 2, 4 handelt es sich beispielsweise um Stranggussprofile, insbesondere bei den Ausführungsvarianten gemäß der Figuren 1, 2a, 2b, 7a, 7b. In allen Ausführungsvarianten sind die beiden Bügel 2, 4 schraubenlos gegeneinander verspannbar. Der Hauptbügel 2 weist allgemein an seinem einen Ende eine haken- oder klauenförmige Seilaufnahme 8 und an seinem gegenüberliegenden Ende eine in den Ausführungsvarianten als Befestigungsöse 10 ausgebildetes Befestigungselement auf. An diesem der Seilaufnahme 8 gegenüberliegenden Ende wird ein einem Seil 12 zu befestigender Gegenstand 50 an der Befestigungsklemme 1 befestigt.

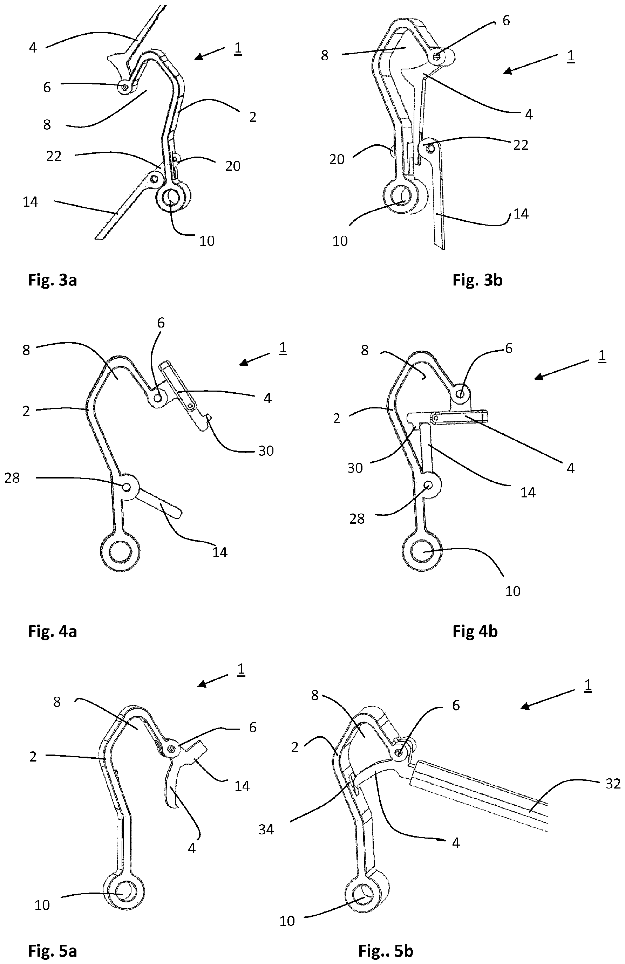

Die Ausführungsvarianten der Fig. 3 bis 6 zeigen jeweils eine Ausführungsvariante mit einem Hauptbügel 2, welcher vergleichsweise langgestreckt und mit einer ausgeprägten, hakenförmigen Seilaufnahme 8 ausgebildet ist. Diese Ausführungsvarianten können besonders einfach am Seil 12 eingehängt werden. Bei den Ausführungsvarianten der Fig. 1, 2 sowie 7 ist der Hauptbügel 2 gedrungener ausgebildet und weist eine weniger ausgeprägte Seilaufnahme 8 auf. Während bei der erstgenannten Gruppe das erste Drehgelenk 6 über einen separaten Gelenkbolzen ausgebildet ist, ist bei den Ausführungsvarianten der zweitgenannten Gruppe das erste Drehgelenk 6 durch eine komplementäre Ausformung der beiden Bügel 2, 4, nämlich einerseits eine etwa C-förmige Aufnahme und andererseits ein endseitig angeformter Bolzen ausgebildet. Bei der zweitgenannten Gruppe sind die beiden Bügel 2, 4 als klassische Stranggussprofile ausgebildet, die im Bereich des ersten Drehgelenks 6 in Seilrichtung ineinander geschoben werden und dadurch unverlierbar über das erste Drehgelenk 6 aneinander gehalten sind. Bei der Ausführungsvariante der erstgenannten Gruppe (Fig. 3 bis 6) erfolgt dies über den Drehbolzen. Die einzelnen Elemente der Befestigungsklemme 1 dieser ersten Gruppe sind insbesondere als einzelne, separate Gusselemente gefertigt.

Im geöffneten Zustand sind die beide Bügel 2, 4 um eine Einführöffnung voneinander beabstandet, sodass das Seil 12 der Freileitung zwischen die Bügel 2, 4 durch ein radiales Heranführen an das Seil 12 eingeführt werden kann. Um ein Einhaken des Hauptbügels 2 bei der Montage zu ermöglichen, und zu gewährleisten, dass auch in der noch offenen Position die Befestigungsklemme 1 am Seil 12 selbsttragend, also ohne weitere Sicherungselemente, in einer Vormontageposition hängenbleibt, erstreckt sich die Seilaufnahme 8 vorzugsweise über mehr als 180°, insbesondere um mehr als 210°.

Zur Überführung der Betätigungsklemme 1 von der offenen in die geschlossene Position ist in allen Ausführungsvarianten eine einfach zu betätigende Betätigungsmechanik ausgebildet. Allen unterschiedlichen in den verschiedenen Ausführungsvarianten dargestellten Betätigungsmechaniken ist dabei gemeinsam, dass durch Betätigen eines Betätigungselements, nämlich Verschwenken eines Betätigungsarms 14 oder durch Entfernen eines Sperrelements 46, die Befestigungsklemme 1 in die geschlossene Position überführt und dort auch gesichert ist. Bei dem Betätigungsarm 14 handelt es sich allgemein um einen Hebelarm.

Die Ausführungsvarianten der Figuren 1 bis 7 zeigen unterschiedliche Ausführungsvarianten einer als Hebelmechanismus ausgebildeten Betätigungsmechanik.

Gemäß der ersten in Fig. 1 dargestellten Ausführungsvariante ist entweder einseitig oder beidseitig an den beiden Bügeln 2, 4 ein Knickhebel angebracht mit zwei Hebelarmen 18a, 18b, wobei der auf der rechten Seite dargestellte Hebelarm 18b den Betätigungsarm 14 bildet. Die beiden Hebelarme 18a, 18b sind dabei jeweils gelenkig an jeweils einem ihnen zugeordneten Bügel 2, 4 sowie aneinander ebenfalls gelenkig befestigt. Der an dem Schließbügel 4 befestigte Hebelarm 18b weist dabei einen überstehenden Hebelarmbereich auf, welcher den Betätigungsarm 14 bildet. Durch Betätigung des Betätigungsarms 14 nach unten wird der Schließbügel 4 gegen den Hauptbügel 2 gezogen und damit das Seil 12 eingeklemmt. Zur Sicherung in der geschlossenen Stellung ist ergänzend noch eine hier nicht näher dargestellte Hebelsperre ausgebildet, sodass ein Lösen nicht oder nur mit einem definierten Kraftaufwand ermöglicht ist. Die Hebelarme 18a, 18b sind dabei unterhalb der Seilaufnahme 8, also in einem Mittenbereich des Hauptbügels 2, zwischen der Seilaufnahme 8 und dem ersten Drehgelenk 6, angeordnet.

Bei der zweite Ausführungsvariante gemäß den Fig. 2a, 2b ist der Hebelmechanismus gebildet aus dem Betätigungsarm 14 und einem Zugarm 20. Ergänzend sind bei dieser Ausführungsvariante die beiden Arme 14, 18 nicht seitlich angeordnet, sondern durch die Bügel 2, 4 hindurchgeführt. Auch hier sind Betätigungsarm 14 und Zugarm 20 zwischen Seilaufnahme 8 und erstes Drehgelenk 6 platziert. Der Zugarm 20 ist am Schließbügel 4 gelagert, wie insbesondere aus Fig. 2 ersichtlich ist. Er durchstößt sowohl den Schließbügel 4 als auch den Hauptbügel 2 im Wesentlichen senkrecht zur Seilrichtung. Auf der in Figur 2a nicht zu erkennenden Rückseite des Hauptbügels 2 ist der Betätigungsarm 14 über einen Exzenter 22 (vergleiche zum Beispiel Fig. 3a) drehbeweglich mit dem Zugarm 20 verbunden. Bei einer Schwenkbewegung des Betätigungsarms 14 erfolgt daher aufgrund der exzentrischen Lagerung ein Anziehen des Schließbügels 4 in Richtung zum Hauptbügel 2 in die geschlossene Position. Zur Ausübung der Zugkraft stützt sich dabei der Betätigungsarm 14 mit seinem Exzenter 22 am Hauptbügel 2 ab. Der Exzenter 22 ist dabei derart ausgebildet, dass in der geschlossenen Position der Betätigungsarm 14 lediglich mit erhöhter Kraftaufwand wieder gelöst werden kann, das heißt der Betätigungsarm 14 schnappt in eine geschlossene Endstellung aufgrund der speziellen Ausgestaltung des Exzenters 22 ein.

Bei der dritten Ausführungsvariante gemäß den Figuren 3a, 3b ist ebenfalls eine Ausführungsvariante mit Hilfe eines Exzenters 22 am Ende des Betätigungsarmes 14 dargestellt. Der Betätigungsarm 14 der Ausführungsvariante der Fig. 2a, 2b weist beispielsweise einen derartigen aus Fig. 3a, 3b zu entnehmenden Exzenter 22 auf. Im Unterschied zu der Ausführungsvariante der Fig. 2a, 2b ist nunmehr der Zugarm 20 am Hauptbügel 2 gelagert und der Betätigungsarm 14 stützt sich am Schließbügel 4 ab. Ein weiterer wesentlicher Unterschied ist ergänzend darin zu sehen, dass nunmehr das erste Drehgelenk 6 endseitig an der hakenförmigen Seilaufnahme 8 ausgebildet ist, sodass der Schließbügel 4 von oben nach unten verschwenkbar am Hauptbügel 2 gehalten ist. Der Schwenkbügel 4 weist an seinem unteren Ende einen Einführschlitz auf, mit dem er über den Zugarm 20 beim Überführen in die Schließposition gestülpt wird.

Bei dieser Ausführungsvariante wird daher zunächst der Hauptbügel 2 am Seil 12 eingehängt, anschließend wird in einfacher Weise beispielsweise durch ein einfaches Anstoßen der Schließbügel 4 aus der in der Fig. 3a gezeigten oberen Position in der in der Fig. 3b gezeigten unteren Position überführt. Allein durch die Schwerkraft wird er dabei zumindest annähernd die in Fig. 3b dargestellte Position einnehmen. Zum Verriegeln ist dann lediglich noch erforderlich, dass mithilfe der Betätigungsmechanik der Zugarm 20 mit Hilfe des Betätigungsarms 14 von unten in die schlitzförmige Aufnahme am Schließbügel 4 hochgeschoben wird und anschließend der Betätigungsarm 14 verschwenkt wird, sodass über den Exzenter 22 der Schließbügel 4 in Richtung zum Hauptbügel 2 verpresst wird. Der Schließbügel 4 hat in dieser Ausführungsvariante dabei einen oberen Bügelarm 24, welcher zum Einklemmen des Seils 12 bevorzugt mit einer Rundung zur Seilaufnahme 8 hin ausgebildet ist. An diesen schließt sich ein Schließarm 26 nahezu rechtwinklig an, der als Teil der Betätigungsmechanik mit dem Betätigungsarm 14 und dem Zugarm 20 zusammenwirkt.

In beiden Ausführungsvarianten der Fig. 2a, 2b sowie 3a, 3b ist der Zugarm 20 einerseits an den jeweiligen Bügel 2, 4 und andererseits am Betätigungsarm 14 schwenkbeweglich gelagert.

Bei der Ausführungsvariante der Fig. 4a, 4b ist der Schließbügel 4 wiederum am Ende der Seilaufnahme 8 drehbeweglich gelagert. Ergänzend ist gegenüberliegend zum ersten Drehgelenk 6 am Hauptbügel 2 ein zweites Drehgelenk 28, insbesondere zwischen der Befestigungsöse 10 und dem Beginn der hakenförmigen Seilaufnahme 8, angeordnet, an dem der Betätigungsarm 14 drehbeweglich gelagert ist. In Fig. 4a ist die offene Position dargestellt. Durch Verschwenken sowohl des Schließbügels 4 als auch des Betätigungsarmes 14 in Richtung zur Seilaufnahme 8 hin wird die Befestigungsklemme 1 dann in die geschlossene Position überführt. Dabei wird erst der Schließbügel 4 eingeschwenkt und anschließend der Betätigungsarm 14, sodass dieser - wie in Fig. 4b erkenntlich ist - den Schließbügel 4 an dessen Unterseite hintergreift. Zweckdienlicherweise sind Schließbügel 4 sowie Betätigungsarm 14 in der Schließstellung winklig zueinander orientiert. Und zwar derart, dass eine Kraftwirkung entgegen der Schließrichtung, also beispielsweise im Ausführungsbeispiel in vertikaler Richtung nach unten in Richtung zur Befestigungsöse 10 hin, eine Selbstsperrung aufgrund der eingeleiteten Kräfte bewirkt. Ergänzend ist bei der Ausführungsvariante gemäß den Fig. 4a, 4b am Schließbügel 4 noch ein Formschlusselement nach Art einer abstehenden Nase 30 ausgebildet, welches ein Abrutschen des Betätigungsarms 14 in Richtung zum Hauptbügel 2 verhindert.

Die Ausführungsvariante gemäß den Fig. 5a, 5b zeigt eine zu der Fig. 4a, 4b etwas abgewandelte Ausführungsvariante. Bei dieser ist wiederum der Schließbügel 4 am Ende der Seilaufnahme 8 über das erste Drehgelenk 6 gelagert. Der Betätigungsarm 14 ist nunmehr jedoch Teil des Schließbügels 4 und ist als ein über das erste Drehgelenk 6 überstehender Hebelansatz ausgebildet. Mithilfe eines Werkzeuges 32, beispielsweise einer Stange, wird der Schließbügel 4 von der in der Fig. 5a dargestellten offenen Position in die in Fig. 5b dargestellte Schließposition überführt. Zur Sicherung ist am Hauptbügel 2 ein als Rastnase 34 ausgebildetes Rast- oder Formschlusselement angeformt. Dieses ist im Querschnitt etwa keilförmig mit einer Anlaufschräge ausgebildet. Die Fig. 5b zeigt einen Zwischenmontagezustand, bei dem der Schließbügel 4 entlang dieser Anlaufschräge geführt wird. In der Endmontageposition hintergreift der Schließbügel 4 die Rastnase 34 formschlüssig. Die Rastnase 34 bildet daher eine Art Widerhaken aus.

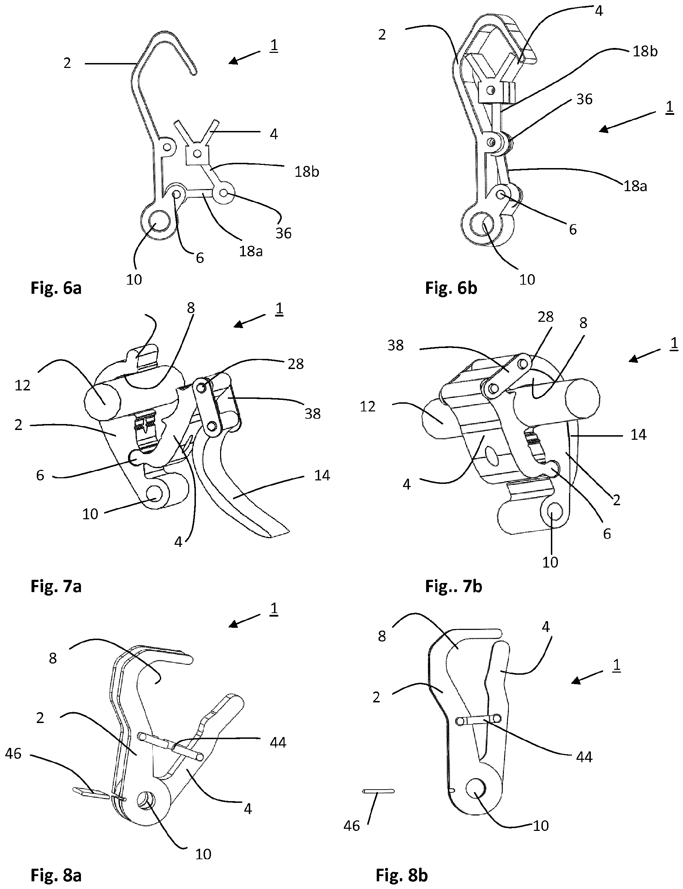

Bei der Ausführungsvariante der Fig. 6a, 6b ist der Schließbügel 4 am Ende eines als Kniehebel ausgebildeten Hebelmechanismuses angeordnet und bildet selbst ein Gelenkglied des Kniehebels. Der Schließbügel 4 ist über den Kniehebel mittelbar über das erste Drehgelenk 6 am Hauptbügel 2 angelenkt. Der Hebelmechanismus umfasst zur Ausbildung des Kniehebels zwei Hebelarme 18a, 18b, wobei der untere Hebelarm 18a am ersten Drehgelenk 6 am Hauptbügel 2 und zwar im Ausführungsbeispiel nahe an dessen unteren Ende im Bereich der Befestigungsöse 10 drehbeweglich gelagert ist. Die beiden Hebelarme 18a, 18b sind über ein Kniegelenk 36 miteinander verbunden. In der geöffneten Position, die in Fig. 6a dargestellt ist, befindet sich das Kniegelenk 36 in einer abgewinkelten Stellung und wird von dieser zur Überführung in die Schließposition in eine gestreckte Stellung und vorzugsweise auch eine überstreckte Stellung überführt. In dieser überstreckten Stellung ist wiederum eine automatische Selbsthemmung erzielt. Ergänzend besteht noch die Möglichkeit, in der Schließposition den Kniehebel zu sichern. Hierzu kann beispielsweise ein Sicherungsstift durch das Kniegelenk 36 und eine entsprechende Öse am Hauptbügel 2 hindurchgeführt werden.

Gemäß der Ausführungsvariante der Fig. 7a, 7b ist das erste Drehgelenk 6 wiederum zwischen der Seilaufnahme 8 und der Befestigungsöse 10 angeordnet. Ergänzend ist der Betätigungsarm 14 dem ersten Drehgelenk 6 gegenüberliegenden Ende des Schließbügels 4 an einem zweiten Drehgelenk 28 mit dem Schließbügel 4 verbunden. Der Betätigungsarm 14 wird zum Überführen von der offenen Position (Fig. 7a) in die geschlossene Position (Fig. 7b) kopfüber über den Schließbügel 4 verschwenkt und umgreift den Hauptbügel 2 und sichert die geschlossene Stellung.

Im Ausführungsbeispiel ist hierzu der Betätigungsarm 14 zweigliedrig nach Art einer Schnalle ausgebildet und weist ein Mittenstück 38 sowie eine Umklapplasche 40 auf, welche aneinander schwenkbeweglich befestigt sind. Das Mittenstück 38 ist dabei gebildet durch zwei Seitenstege, die zwischen sich einen Freiraum definieren. Mit diesem Freiraum übergreift der Betätigungsarm 14 einen am Hauptbügel 2 ausgeformten, nach oben abstehenden Haltesteg 42, gegen den der Betätigungsarm 14 in der geschlossenen Stellung verspannt ist. Beim Umlegen des Umlenkflansches 40 wird dabei der Schließbügel 4 gegen den Hauptbügel 2 gezogen, um die gewünschte Klemmwirkung zu erzielen.

Bei der Ausführungsvariante der Fig. 8a, 8b ist schließlich ein Federmechanismus vorgesehen, welcher eine Federkraft in Richtung der geschlossenen Stellung ausübt. Ein derartiger Federmechanismus kann grundsätzlich unterstützend auch bei den anderen Ausführungsvarianten eingesetzt werden.

Im Ausführungsbeispiel der Fig. 8a, 8b ist hierzu eine die beiden Bügel 2, 4 verbindende Zugfeder 44 angeordnet. Um die Befestigungsklemme 1 in der offenen Stellung zu halten, wie sie in Fig. 8a dargestellt ist, ist ein Sperrelement 46, das im Ausführungsbeispiel nach Art einer Platte ausgebildet ist, formschlüssig zur Sperrung in die beiden Bügel 2, 4 eingefügt. Das Sperrelement 46 verhindert, dass die beiden Bügel 2, 4 aufgrund der Zugfeder 44 in die geschlossene Stellung springen, wie sie in Fig. 8b dargestellt ist. Bei der Montage ist daher lediglich in einem ersten Schritt die Befestigungsklemme 1 mit dem Hauptbügel 2 am Seil 12 einzuhängen und anschließend ist das Sperrelement 46 zu entfernen. Der Schließbügel 4 schnappt dann automatisch in die Schließposition.

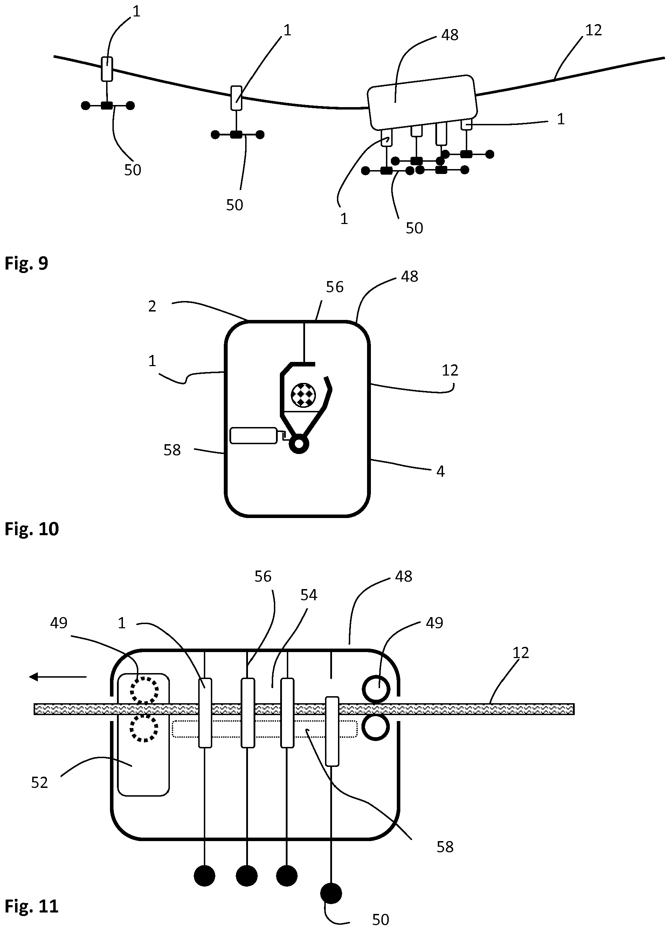

Mit Hilfe der Befestigungsklemme 1 ist allgemein aufgrund des sehr einfach zu handhabenden Betätigungsmechanismus eine sehr einfache Montage ermöglicht. Insbesondere ist hierbei vorgesehen, dass die Montage der Befestigungsklemme 1 zusammen mit einem daran bereits befestigten Gegenstand 50 vollautomatisch ohne eine manuelle Unterstützung durch Bedienpersonal erfolgt. Ein derartiges automatisiertes Verfahren wird beispielhaft anhand der Fig. 9 bis Fig. 11 erläutert.

Fig. 9 zeigt einen Ausschnitt aus einer Freileitung eines einzelnen Seils 12 zwischen zwei Abspannpunkten, die typischerweise durch Abspannmaste gebildet sind (nicht dargestellt). Üblicherweise sind zwischen zwei Abspannmasten eine Vielzahl derartiger Seile 12, insbesondere Leiterseile, abgespannt. Mehrere derartiger Seile 12 sind üblicherweise zu einem Bündelleiter zusammengefasst und mit Abstandshaltern auf einem definierten Abstand zueinander gehalten.

Zur Befestigung der Befestigungsklemmen 1 ist ein Manipulator 48 vorgesehen, welcher im Ausführungsbeispiel der Fig. 9 nach Art einer Laufkatze ausgebildet ist, welche mit Hilfe von Rollen 49 am Seil 12 entlang fährt. Der Manipulator 48 ist daher in der Lage, sich selbsttätig entlang des Seils 12 fortzubewegen. Alternativ hierzu besteht auch die Möglichkeit, als Manipulator 48 ein fernsteuerbares Fluggerät (Drohne) einzusetzen.

Der Manipulator 48 ist mit einer eigenen Antriebseinheit 52 (Fig. 11), beispielsweise ein batteriebetriebener Elektromotor, ausgebildet. Dieser treibt beispielsweise zumindest eine der Rollen 49 an. Ergänzend weist der Manipulator 48 einen Vorratsraum 54 für die Aufnahme von mehreren Befestigungsklemmen 1 auf. Schließlich weist er als drittes Hauptelement eine Montagemechanik zur automatisierten Heranführung einer jeweiligen Befestigungsklemme 1 an das Seil 12 sowie zum automatisierten Festklemmen der Befestigungsklemmen am Seil 12 auf. Die Montagemechanik weist hierzu geeignete Elemente, wie beispielsweise Greifer, Stellmotoren, etc. auf. In Fig. 10 ist beispielhaft und stark vereinfacht ein lösbarer Haltemechanismus 56 sowie ein Betätigungsmechanismus 58 zur Betätigung eines Betätigungselements der Befestigungsklemme 1 dargestellt.

Die einzelnen Befestigungsklemmen 1 sind im Manipulator 48 innerhalb des Vorratsraums 54 insbesondere nach Art einer Staustrecke aneinander angrenzend aufgereiht. An definierten Stellen des Seils 12, beispielsweise in fest vorgegebenen periodischen Abständen, veranlasst der Manipulator 48 in einem ersten Schritt, dass eine Befestigungsklemme 1 aus der Vorratsstrecke auf das Seil 12 aufgehängt wird. Hierzu kann beispielsweise das Befestigungselement 1 in einfacher Art und Weise aus der Vorratsstrecke in Längsrichtung des Seils 12 auf dieses mit Hilfe des Haltemechanismus 56 aufgeschoben oder aufgehängt werden.

In der beispielhaft dargestellten Variante der Fig. 10,11 umgreifen die Bügel 2,4 der Befestigungsklemmen 1 bereits das Seil 12 lose, vorzugsweise ohne dieses zu berühren. Erreicht der Manipulator eine vorgesehen Befestigungsposition, so wird die Halterung des Haltemechanismus 56 gelöst, so dass die Befestigungsklemme 1 mit dem Hauptbügel 2 auf das Seil 12 aufgehängt wird.

In einem zweiten Schritt wird dann die Montagemechanik, also der Betätigungsmechanismus 58 aktiviert, um die Betätigungsmechanik des Befestigungsbügels 4 zu betätigen, so dass der Befestigungsbügel 4 vollautomatisiert von der offenen Position in die geschlossene, klemmende Position übergeht. Handelt es sich bei der Befestigungsklemme 1 um eine Variante, bei der die beiden Bügel 2,4 vorgespannt und durch ein Sperrelement 46 arretiert sind, so ist lediglich ein Lösen des Sperrelements 46 erforderlich. Dies ist in Fig. 10 vereinfacht anhand einer Befestigungsklemme 1 nach Art der in Fig. 8a 8b gezeigten Variante dargestellt. Der Betätigungsmechanismus 58 wirkt daher auf das Sperrelement 46 ein, beispielsweise mit Hilfe eines insbesondere hakenförmigen Lösemittels. Bei den weiteren Varianten der Befestigungsklemme 1 ist aufgrund der einfachen Betätigungsmechanik lediglich ein einfacher Bewegungsablauf erforderlich. Vorzugsweise ist lediglich das Umlegen eines Hebels, nämlich des Betätigungsarms 14, gegebenenfalls noch ein Umlegen des Schließbügels 4 (beispielsweise bei der Ausführungsvariante der Fig. 3 und 4) erforderlich. Diese mechanischen Betätigungen werden von dem Betätigungsmechanismus 58 in geeigneter Weise veranlasst. Weitere Maßnahmen zum Befestigen der Befestigungsklemme 1 sind nicht erforderlich und auch nicht vorgesehen. Aufgrund der einfachen Befestigungsmechanik ist ein zuverlässiges automatisiertes und damit störungsfreies Befestigen ermöglicht.

Mit Hilfe der Befestigungsklemmen 1 werden (Schutz-) Gegenstände 50 an den Seilen 12 einer Freileitung befestigt. Bei diesen handelt es sich insbesondere um Schwingungsdämpfer, Torsionspendel und insbesondere auch um Leitungsmarkierungen, beispielsweise als Maßnahme für den Vogelschutz oder zur Vogelabwehr, wie beispielsweise Reflektoren. In Fig. 9 ist beispielhaft ein Schwingungsdämpfer oder Torsionspendel dargestellt. Diese Gegenstände 50 werden von dem Manipulator 48 ebenfalls mitgeführt. Sie sind vorzugsweise vormontiert mit den Befestigungsklemmen 1 verbunden, so dass zur Montage nur noch die Befestigungsklemmen 1 am Seil 12 befestigt werden brauchen.

Im Manipulator 48 sind vorzugsweise zumindest oder genau so viele Gegenstände 50 mit Befestigungsklemmen 1 bevorratet, wie in einem Feld zwischen zwei Abspannmaste angeordnet werden sollen.

Bei den Gegenständen 50 handelt es sich alternativ aber auch um so genannte Feldabstandshalter. Hierbei ist erforderlich, dass über die Befestigungsklemmen 1 mehrere zu einem Bündel zusammengefasste Seile 12 miteinander verbunden werden. Der Manipulator 48 ist in diesem Fall dafür ausgelegt, parallel an mehreren Seilen 12 gleichzeitig die Befestigungselemente 1 zu befestigen. Üblicherweise werden eine Gruppe von Seilen 12, beispielsweise vier Seile 12, zu einem Bündel zusammengefasst und gemeinsam über Feldabstandshalter miteinander verbunden. Vorzugsweise ist hierbei vorgesehen, dass eine vormontierte Feldabstandshalter-Vorrichtung von dem Manipulator 48 bevorratet wird, die dann mit einzelnen Eckpunkten über Befestigungsklemmen 1 an die Seile 12 befestigt wird. An mehreren, vorzugsweise an jedem Eckpunkt ist dabei üblicherweise eine Befestigungsklemme 1 angeordnet und die Befestigungsklemmen sind miteinander mechanisch verbunden. Zweckdienlicherweise sind die einzelnen Betätigungsmechaniken der einzelnen Befestigungsklemmen 1 über einen gemeinsamen Auslösemechanismus miteinander verbunden, welcher von dem Betätigungsmechanismus 58 des Manipulators betätigt wird.

Die hier beschriebenen Befestigungsklemmen 1 sowie das beschriebene Verfahren sind nicht auf das Anwendungsgebiet der Freileitungen im engeren Sinn von stromführenden Überlandleitungen beschränkt. Die beschriebenen Konzepte lassen sich grundsätzlich bei Seilen insbesondere im Freiland einsetzten, die zwischen Abspannpunkten abgespannt sind und insbesondere in einer Höhe von mehreren Metern bis mehreren 10 Metern verlaufen, wo eine manuelle Montage und Befestigung nur mit Aufwand beispielsweise mit Hebebühnen etc. ermöglicht ist.

### Bezugszeichenliste

- 1: Befestigungsklemme
- 2: Hauptbügel
- 4: Schließbügel
- 6: erstes Drehgelenk
- 8: Seilaufnahme
- 10: Befestigungsöse
- 12: Seil
- 14: Betätigungsarm
- 18a,18b: Hebelarm
- 20: Zugarm
- 22: Exzenter
- 24: Bügelarm
- 26: Schließarm
- 28: zweites Drehgelenk
- 30: Nase
- 32: Werkzeug
- 34: Rastnase
- 36: Kniegelenk
- 38: Mittenstück
- 40: Umlenkflansch
- 42: Haltesteg
- 44: Zugfeder
- 46: Sperrelement
- 48: Manipulator
- 50: Gegenstand
- 52: Antriebseinheit
- 54: Vorratsraum
- 56: Haltemechanismus
- 58: Betätigungsmechanismus

## Patentansprüche

1. Verfahren zur Befestigung einer Befestigungsklemme (1) an einem Seil, insbesondere einer Freileitung, wobei die Befestigungsklemme (1) mit Hilfe eines Manipulators (48) automatisiert am Seil (12) befestigt wird, wobei die Befestigungsklemme (1) zwei gegeneinander verstellbare Bügel (2, 4), nämlich einen Hauptbügel (2) und einen Schließbügel (4) aufweist,
**dadurch gekennzeichnet,**
**dass** der Manipulator (48) hierzu
- selbsttätig eine jeweilige Befestigungsposition am Seil (12) zur Befestigung einer jeweiligen Befestigungsklemme (2,4) anfährt,
- die Befestigungsklemme (1) automatisch an das Seil (12) heranführt und
- eine Montagemechanik (56,58) umfasst, mit deren Hilfe die Befestigungsklemme (1) automatisiert am Seil (12) befestigt wird, wobei
- die Befestigungsklemme (1) weiterhin ein Betätigungselement umfasst, und über das Betätigungselement die Bügel (2,4) von einer offenen in eine geschlossene, das Seil (12) klemmende Position überführbar sind, und wobei
- die beiden Bügel (2, 4) mechanisch vorgespannt sind und das Betätigungselement ein Sperrglied (46) ist, nach dessen Entfernung die Bügel (2,4) automatisch in die geschlossene Position übergehen.

2. Verfahren zur Befestigung einer Befestigungsklemme (1) an einem Seil, insbesondere einer Freileitung, wobei die Befestigungsklemme (1) mit Hilfe eines Manipulators (48) automatisiert am Seil (12) befestigt wird, wobei die Befestigungsklemme (1) zwei gegeneinander verstellbare Bügel (2, 4), nämlich einen Hauptbügel (2) und einen Schließbügel (4) aufweist,
**dadurch gekennzeichnet,**
**dass** der Manipulator (48) hierzu
- selbsttätig eine jeweilige Befestigungsposition am Seil (12) zur Befestigung einer jeweiligen Befestigungsklemme (2,4) anfährt,
- die Befestigungsklemme (1) automatisch an das Seil (12) heranführt und
- eine Montagemechanik (56,58) umfasst, mit deren Hilfe die Befestigungsklemme (1) automatisiert am Seil (12) befestigt wird, wobei
- die Befestigungsklemme (1) weiterhin ein Betätigungselement umfasst, und über das Betätigungselement die Bügel (2,4) von einer offenen in eine geschlossene, das Seil (12) klemmende Position überführbar sind, und wobei
- der Hauptbügel (2) eine hakenförmige Seilaufnahme aufweist, so dass er selbsttragend am Seil (12) einhängbar ist und die Befestigungsklemme (1) einen Hebelmechanismus aufweist, umfassend einen Betätigungsarm (14), wobei bei Betätigung des Betätigungsarms (14) die Bügel (2,4) in die geschlossene Position überführt werden und der Hebelmechanismus zudem derart ausgebildet ist, dass er die beiden Bügel in der geschlossenen, klemmenden Position hält.

3. Verfahren nach einem der beiden vorhergehenden Ansprüche,
**dadurch gekennzeichnet,**
**dass** die beiden Bügel (2, 4) schraubenlos gegeneinander verspannt werden.

4. Verfahren nach einem der vorhergehenden Ansprüche,
**dadurch gekennzeichnet,**
**dass** der Manipulator (48) mehrere Befestigungsklemmen (1) mit sich führt, die sukzessive am Seil (12) befestigt werden.

5. Verfahren nach einem der vorhergehenden Ansprüche,
**dadurch gekennzeichnet,**
**dass** der Manipulator (48) zur gleichzeitigen Befestigung von mehreren Befestigungsklemmen (1) an mehreren benachbarten Seilen (12) ausgebildet ist, insbesondere zur Befestigung von Feldabstandhaltern zwischen den Seilen (12) eines Bündels.

6. Verfahren nach einem der vorhergehenden Ansprüche,
**dadurch gekennzeichnet,**
**dass** der Manipulator (48) nach Art einer Laufkatze ausgebildet ist, welche am Seil (12) entlang fährt.

7. Verfahren nach einem der vorhergehenden Ansprüche,
**dadurch gekennzeichnet,**
**dass** der Manipulator (48) nach Art einer Drohne ausgebildet ist.

8. Verfahren nach einem der vorhergehenden Ansprüche,
**dadurch gekennzeichnet,**
**dass** der Manipulator (48) fernsteuerbar ist, wobei über die Fernsteuerung die Fortbewegung des Manipulators (48) und / oder die Befestigung einer jeweiligen Befestigungsklemme (1) veranlasst werden kann.

9. Befestigungsklemme (1), insbesondere für ein Verfahren nach einem der vorhergehenden Ansprüche zur Befestigung eines Gegenstandes (50) an einem Seil (12) einer Freileitung umfassend zwei gegeneinander verstellbare Bügel, nämlich einen Hauptbügel (2) und einen Schließbügel (4), die von einer offenen Position in eine geschlossene, das Seil (12) klemmende Position überführbar sind, wobei die beiden Bügel (2, 4) schraubenlos gegeneinander verspannbar sind und ein insbesondere als Betätigungsmechanik ausgebildetes Betätigungselement vorgesehen ist, über das die beiden Bügel (2, 4) von der offenen in die geschlossene, klemmende Position überführbar ist,
**dadurch gekennzeichnet,**
**dass** der Hauptbügel (2) eine hakenförmige Seilaufnahme aufweist, so dass er selbsttragend am Seil (12) einhängbar ist und die Befestigungsklemme (1) einen Hebelmechanismus aufweist, umfassend einen Betätigungsarm (14), wobei bei Betätigung des Betätigungsarms (14) die Bügel (2,4) in die geschlossene Position überführt werden und der Hebelmechanismus zudem derart ausgebildet ist, dass er die beiden Bügel in der geschlossenen, klemmenden Position hält, wobei an dem einen Bügel (2, 4) ein Formschlusselement (30, 34) ausgebildet ist, die in der geschlossenen Stellung von dem anderen Bügel (4, 2) hintergriffen ist, wobei an einem der Bügel (2, 4) der Betätigungsarm (14) angeordnet ist..

10. Befestigungsklemme (1) nach dem vorhergehenden Anspruch ,
**dadurch gekennzeichnet,**
**dass** die beiden Bügel (2, 4) schwenkbeweglich aneinander gelagert sind und über einen Knickhebel verbunden sind, der zwei Hebelarme (18a, 18b) aufweist, die aneinander sowie an den Bügeln (2, 4) gelagert sind und wobei einer der Hebelarme (18b) den Betätigungsarm (14) bildet.

11. Befestigungsklemme (1) nach einem der Ansprüche 10 oder 11,
**dadurch gekennzeichnet,**
**dass** der Betätigungsarm (14) exzentrisch gelagert ist, derart dass er bei einer Schwenkbewegung die Bügel (2, 4) in die geschlossene Position presst.

12. Befestigungsklemme (1) nach einem der Ansprüche 10 bis 12,
**dadurch gekennzeichnet,**
**dass** die Betätigungsmechanik in der geschlossenen Position selbstsperrend ist.

13. Befestigungsklemme (1) nach einem der Ansprüche 10 bis 13,
**dadurch gekennzeichnet,**
**dass** der Hebelmechanismus durch einen Kniehebelmechanismus gebildet ist, der zugleich einen der Bügel (4) umfasst, wobei der Kniehebel den Betätigungsarm (14) umfasst.

14. Befestigungsklemme (1), insbesondere für ein Verfahren nach einem der vorhergehenden Ansprüche zur Befestigung eines Gegenstandes (50) an einem Seil (12) einer Freileitung umfassend zwei gegeneinander verstellbare Bügel, nämlich einen Hauptbügel (2) und einen Schließbügel (4), die von einer offenen Position in eine geschlossene, das Seil (12) klemmende Position überführbar sind, wobei die beiden Bügel (2, 4) schraubenlos gegeneinander verspannbar sind und ein insbesondere als Betätigungsmechanik ausgebildetes Betätigungselement vorgesehen ist, über das die beiden Bügel (2, 4) von der offenen in die geschlossene, klemmende Position überführbar ist,
**dadurch gekennzeichnet,**
**dass** die beiden Bügel (2, 4) über einen Federmechanismus (44) gegeneinander verspannt sind und ein Sperrelement (46) die beiden Bügel (2, 4) in der offenen Position hält, derart, dass bei Entfernen des Sperrelements (46) die beiden Bügel (2, 4) selbsttätig in die geschlossene Position übergehen.

## Claims

1. Method for fastening a clamp (1) to a cable, in particular an overhead line, wherein the fastening clamp (1) is automatically fastened to the cable (12) by means of a manipulator (48), wherein
the fastening clamp (1) has two brackets (2,4) which are adjustable relative to each another, namely a main bracket (2) and a closing bracket (4),
**characterized in**
**that** for this purpose the manipulator (48)
- automatically approaches a respective fastening position on the cable (12) for fastening a respective fastening clamp (2,4),
- automatically guides the fastening clamp (1) to the cable (12) and
- comprises an assembly mechanism (56,58) with the aid of which the fastening clamp (1) is automatically fastened to the cable (12), wherein
- the fastening clamp (1) further comprises an actuating element, and via said actuating element the brackets (2,4) can be transferred from an open position into a closed position, said closed position clamping the cable (12), and wherein
- the two brackets (2,4) are mechanically pretensioned and the actuating element is a blocking element (46), after the removal of which the brackets (2,4) automatically pass into to the closed position.

2. Method of fastening a fastening clamp (1) to a cable, in particular an overhead line, wherein the fastening clamp (1) is automatically fastened to the cable (12) by means of a manipulator (48), wherein
the fastening clamp (1) has two brackets (2,4) which are adjustable relative to each other, namely a main bracket (2) and a closing bracket (4),
**characterized in**
**that** for this purpose the manipulator (48)
- automatically approaches a respective fastening position on the cable (12) for fastening a respective fastening clamp (2,4),
- automatically guides the fastening clamp (1) to the cable (12) and
- comprises an assembly mechanism (56,58) with the aid of which the fastening clamp (1) is automatically fastened to the cable (12), wherein
- the fastening clamp (1) further comprises an actuating element, and via said actuating element the brackets (2,4) can be transferred from an open position into a closed position clamping the cable (12), and wherein
- the main clamp (2) has a hook-shaped cable receptacle, so that it can be suspended in a self-supporting manner from the cable (12), and the fastening clamp (1) has a lever mechanism comprising an actuating arm (14), wherein upon actuation of the actuating arm (14) the clamps (2,4) are transferred into the closed position and in addition the lever mechanism is designed to hold the two clamps in the closed, clamping position.

3. Method according to one of the two preceding claims,
**characterized in**
**that** the two brackets (2,4) are braced against each other without screws.

4. Method according to one of the previous claims,
**characterized in**
**that** the manipulator (48) carries a plurality fastening clamps (1) with it, which are successively fastened to the cable (12).

5. Method according to one of the previous claims,
**characterized in**
**that** the manipulator (48) is designed for simultaneously fastening a plurality of fastening clamps (1) to a plurality of adjacent cables (12), in particular for fastening field spacers between the cables (12) of a bundle.

6. Method according to one of the preceding claims,
**characterized in**
**that** the manipulator (48) is designed in the manner of a trolley which drives along the cable (12).

7. Method according to one of the preceding claims,
**characterized in**
**that** the manipulator (48) is designed in the manner of a drone.

8. Method according to one of the preceding claims,
**characterized in**
**that** the manipulator (48) can be remotely controlled, wherein via the remote control it is possible to initiate the movement of the manipulator (48) and/or the fastening of a respective fastening clamp (1).

9. Fastening clamp (1), in particular for a method according to one of the preceding claims for fastening an object (50) to a cable (12) of an overhead line comprising two brackets, which are adjustable relative to each another, namely a main bracket (2) and a closing bracket (4), which can be moved from an open position into a closed position, said closed position clamping the cable (12), wherein the two brackets (2,4) can be braced against each other without screws and an actuating element is provided, which is constructed in particular as an actuating mechanism and via which the two brackets (2,4) can be transferred from the open to the closed, clamping position,
**characterized in**
**that** the main clamp (2) has a hook-shaped cable receptacle, so that it can be suspended in a self-supporting manner on the cable (12), and the fastening clamp (1) has a lever mechanism comprising an actuating arm (14), wherein the clamps (2,4) are transferred into the closed position upon actuation of the actuating arm (14), and in addition the lever mechanism is designed in such way that it holds the two brackets in the closed, clamping position, wherein a positive-locking element (30, 34) is formed on one bracket (2,4), said element being engaged behind by the other bracket (4, 2) in the closed position, wherein the actuating arm (14) is arranged on one of the brackets (2,4)..

10. Fastening clamp (1) according to the preceding claim ,
**characterized in**
**that** the two brackets (2,4) are pivotably mounted on each another and are connected via an articulated lever that has two lever arms (18a, 18b) which are mounted on each another and on the brackets (2,4), and wherein one of the lever arms (18b) forms the actuating arm (14).

11. Fastening clamp (1) according to one of claims 10 or 11,
**characterized in**
**that** the actuating arm (14) is eccentrically mounted in such a way that it presses the brackets (2,4) into the closed position during a pivoting movement.

12. Fastening clamp (1) according to one of claims 10 to 12,
**characterized in**
**that** in the closed position the actuating mechanism is self-locking.

13. Fastening clamp (1) according to one of claims 10 to 13,
**characterized in**
**that** the lever mechanism is formed by a toggle lever mechanism which simultaneously comprises one of the brackets (4), wherein the toggle lever comprises the actuating arm (14).

14. Fastening clamp (1), in particular for a method according to one of the preceding claims for fastening an object (50) to a cable (12) of an overhead line, comprising two brackets, namely a main bracket (2) and a closing bracket (4), which are adjustable relative to each another and which can be moved from an open position to a closed position, said closed position clamping the cable (12), wherein the two brackets (2,4) can be braced against each other without screws and an actuating element is provided, which is constructed in particular as an actuating mechanism and via which the two brackets (2,4) can be transferred from the open to the closed, clamping position,
**characterized in**
**that** the two brackets (2,4) are braced against each another via a spring mechanism (44) and a locking element (46) holds the two brackets (2,4) in the open position in such a way that upon removal of the locking element (46) the two brackets (2,4) are automatically pass into the closed position.

## Revendications

1. Procédé de fixation d'une bride de fixation (1) à un câble, en particulier à une ligne aérienne, la bride de fixation (1) étant fixée automatiquement sur le câble (12) à l'aide d'un manipulateur (48), dans lequel la bride de fixation (1) comporte deux étriers (2,4) réglables l'un par rapport à l'autre, en effet un étrier principal (2) et un étrier de fermeture (4),
**caractérisé en ce**
**qu'**à cette fin, le manipulateur (48)
- se déplace automatiquement vers une position de fixation respective sur le câble (12) pour fixer une bride de fixation respective (2,4),
- guide automatiquement l'étrier de fixation (1) vers le câble (12) et
- comprend un mécanisme d'assemblage (56,58) à l'aide duquel la bride de fixation (1) est automatiquement fixée au câble (12), dans lequel
- la bride de fixation (1) comprend en outre un élément d'actionnement, et via ledit élément d'actionnement les étriers (2,4) peuvent être transférés d'une position ouverte à une position fermée, la position de serrage du câble (12), et dans lequel
- les deux étriers (2,4) sont précontraints mécaniquement et l'élément d'actionnement est un élément de blocage (46), après l'élimination duquel les étriers (2,4) passent automatiquement en position fermée.

2. Procédé de fixation d'une bride de fixation (1) à un câble, en particulier à une ligne aérienne, la bride de fixation (1) étant fixée automatiquement au câble (12) à l'aide d'un manipulateur (48), dans lequel l'étrier de fixation (1) comporte deux étriers (2,4) réglables l'un par rapport à l'autre, en effet un étrier principal (2) et un étrier de fermeture (4),
**caractérisé en ce**
**qu'**à cette fin, le manipulateur (48)
- se déplace automatiquement vers une position de fixation respective sur le câble (12) pour fixer une bride de fixation respective (2,4),
- guide automatiquement l'étrier de fixation (1) vers le câble (12) et
- comprend un mécanisme d'assemblage (56,58) à l'aide duquel la bride de fixation (1) est automatiquement fixée au câble (12), dans lequel
- la bride de fixation (1) comprend en outre un élément d'actionnement, et via ledit élément d'actionnement les étriers (2,4) peuvent être transférés d'une position ouverte à une position fermée, la position de serrage du câble (12), et dans lequel
- l'étrier principal (2) comporte un logement de câble en forme de crochet, de sorte qu'il peut être suspendu de manière autoportante au câble (12), et la bride de fixation (1) comporte un mécanisme de levier comprenant un bras d'actionnement (14), dans lequel lors de l'actionnement du bras d'actionnement (14) les étriers (2,4) sont transférées dans la position fermée et le mécanisme de levier est en outre conçu pour maintenir les deux brides dans la position fermée, la position de serrage.

3. Procédé selon l'une des deux revendications précédentes,
**caractérisé en ce**
**que** les deux étriers (2,4) sont serrés l'un contre l'autre sans vis.

4. Procédé selon l'une des revendications précédentes,
**caractérisé en ce**
**que** le manipulateur (48) porte avec lui une pluralité de brides de fixation (1), qui sont successivement fixées au câble (12).

5. Procédé selon l'une des revendications précédentes,
**caractérisé en ce**
**que** le manipulateur (48) est conçu pour simultanément fixer une pluralité de brides de fixation (1) à une pluralité de câbles (12) adjacents, en particulier pour fixer des entretoises de champ entre les câbles (12) d'un faisceau.

6. Procédé selon l'une des revendications précédentes,
**caractérisé en ce**
**que** le manipulateur (48) est conçu à la manière d'un chariot qui se déplace le long du câble (12).

7. Procédé selon l'une des revendications précédentes,
**caractérisé en ce**
**que** le manipulateur (48) est conçu à la manière d'un drone.

8. Procédé selon l'une des revendications précédentes,
**caractérisé en ce**
**que** le manipulateur (48) peut être commandé à distance, la télécommande permettant de déclencher le mouvement du manipulateur (48) et/ou la fixation d'une bride de fixation (1) correspondante.

9. Bride de fixation (1), en particulier pour un procédé selon l'une des revendications précédentes pour la fixation d'un objet (50) à un câble (12) d'une ligne aérienne comprenant deux étriers réglables l'un par rapport à l'autre, en effet un étrier principal (2) et un étrier de fermeture (4), qui peuvent être déplacés d'une position ouverte à une position fermée, la position de serrage du câble (12), dans laquelle les deux étriers (2,4) peuvent être serrés l'un contre l'autre sans vis et un élément d'actionnement est prévu, qui est conçu en particulier comme un mécanisme d'actionnement et par lequel les deux étriers (2,4) peuvent être transférés de la position ouverte à la position fermée, la position de serrage,
**caractérisée en ce**
**que** l'étrier principal (2) comporte un logement de câble en forme de crochet, de sorte qu'il peut être suspendue de manière autoportante sur le câble (12), et la bride de fixation (1) comporte un mécanisme de levier comprenant un bras d'actionnement (14), dans lequel lors de l'actionnement du bras d'actionnement (14) les étriers (2,4) sont transférés en position fermée, et le mécanisme de levier est en outre conçu pour maintenir les deux brides dans la position fermée, la position de serrage du câble (12), dans laquelle un élément à engagement positif (30, 34) est formé sur l'un des étriers (2,4), ledit élément étant engagé derrière par l'autre étrier (4, 2) en position fermée, le bras d'actionnement (14) étant disposé sur l'un des étriers (2,4)..

10. Bride de fixation (1) selon la revendication précédente,
**caractérisée en ce**
**que** les deux étriers (2,4) sont montés pivotants l'un sur l'autre et sont reliés par un levier articulé qui comporte deux bras de levier (18a, 18b) montés l'un sur l'autre et sur les étriers (2,4), l'un des bras de levier (18b) formant le bras d'actionnement (14).

11. Bride de fixation (1) selon l'une des revendications 10 ou 11,
**caractérisée en ce**
**que** le bras d'actionnement (14) est monté de manière excentrée, de telle sorte qu'il pousse les étriers (2,4) en position fermée lors d'un mouvement de pivotement.

12. Bride de fixation (1) selon l'une des revendications 10 à 12,
**caractérisée en ce**
**qu'**en position fermée le mécanisme d'actionnement est autobloquant.

13. Bride de fixation (1) selon l'une des revendications 10 à 13,
**caractérisée en ce**
**que** le mécanisme de levier est formé par un mécanisme à levier basculant qui comprend simultanément l'un des étriers (4), le levier basculant comprenant le bras d'actionnement (14).

14. Bride de fixation (1), en particulier pour un procédé selon l'une des revendications précédentes pour fixer un objet (50) à un câble (12) d'une ligne aérienne, comprenant deux étriers, en effet un étrier principal (2) et un étrier de fermeture (4), qui sont réglables l'un par rapport à l'autre et qui peuvent être déplacés d'une position ouverte à une position fermée, la position de serrage du câble (12), dans laquelle les deux étriers (2,4) peuvent être serrés l'un contre l'autre sans vis et un élément d'actionnement est prévu, qui est conçu en particulier comme un mécanisme d'actionnement et par lequel les deux étriers (2,4) peuvent être transférés de la position ouverte à la position fermée de serrage,
**caractérisée en ce**
**que** les deux étriers (2,4) sont serrés l'un contre l'autre par un mécanisme à ressort (44) et un élément de verrouillage (46) maintient les deux étriers (2,4) en position ouverte de telle sorte que, lorsque l'élément de verrouillage (46) est retiré, les deux étriers (2,4) passent automatiquement en position fermée.
